Europäisches Patentamt

(19) European Patent Office (11) Numéro de publication : **0 043 331**

Office européen des brevets **B1**

(12) **FASCICULE DE BREVET EUROPÉEN**

(45) Date de publication du fascicule du brevet :
03.04.85

(21) Numéro de dépôt : **81401056.7**

(22) Date de dépôt : **01.07.81**

(51) Int. Cl.⁴ : **D 06 P    1/38**, D 06 P    1/00,
C 09 B    67/24

(54) **Procédé de teinture à froid sur tissu et produits pour sa mise en oeuvre.**

(30) Priorité : 02.07.80 FR 8014727

(43) Date de publication de la demande :
06.01.82 Bulletin 82/01

(45) Mention de la délivrance du brevet :
03.04.85 Bulletin 85/14

(84) Etats contractants désignés :
AT BE CH DE GB IT LI LU NL SE

(56) Documents cités :
EP-A- 0 026 886
EP-A- 0 037 117
FR-A- 1 232 348
FR-A- 1 421 945
FR-A- 1 523 400
FR-A- 2 146 545
FR-A- 2 245 816
TEXTILVEREDLUNG, vol. 14, no. 7, juillet 1979 BASEL
(CH) B. MIHALIK: "Kunstgewerblich handbemalte
Textilien", pages 285 à 292

(73) Titulaire : **ARTSCHIMIE**
**12 rue Louis Rolland**
**F-92120 Montrouge (FR)**

(72) Inventeur : **Viguier, René**
**6 rue de Bel Air**
**F-93360 Neuilly-Plaisance (FR)**

(74) Mandataire : **Thibon-Littaye, Annick**
**Cabinet A. THIBON-LITTAYE 11 rue de l'Etang**
**F-78160 Marly-le-Roi (FR)**

## 0 043 331

## Description

L'invention concerne la teinture à froid des tissus. Elle a pour objet un procédé de teinture à froid et des produits utiles pour la mise en œuvre de ce procédé. Elle s'étend aux tissus teints par ce procédé, le plus souvent de manière artisanale. Elle vise, en effet, principalement à permettre la décoration des tissus, de toutes fibres naturelles ou artificielles, en particulier ceux de coton, au moyen de produits de teinture applicables au pinceau et ne nécessitant pas de traitement de fixage spécial.

Le brevet FR-A-1.523.400 décrit un procédé de teinture de matières textiles par des colorants de type acide sans l'emploi de la chaleur et ce, en saturant la matière textile à l'aide d'une solution colorante aqueuse contenant un alcool miscible à l'eau et à une température inférieure à celle qui s'avère habituellement nécessaire pour la fixation substantielle de la matière colorante, et ensuite en enfermant la matière saturée dans une machine armoire ou similaire, étanche à l'humidité et à la vapeur, et en la stockant pendant au moins 17 heures environ à la température ambiante. L'alcool ajouté aux composés de matières colorantes est choisi parmi ceux mono-hydriques contenant moins de quatre atomes de carbone, et, de préférence, l'éthanol.

Le brevet FR-A-1.232.348 concerne un procédé de teinture de matières polyhydroxylées de structure fibreuse dans lequel le fixage a lieu sans apport de chaleur en faisant réagir à la température ambiante ou tout au plus modérée lesdites matières, à l'état mouillé, avec les colorants réactifs en présence d'un agent liant les acides, qui présente en solution dans l'eau, une réaction plus alcaline que celle du phosphate trisodique, tel que l'hydroxide de sodium.

Dans le brevet FR-A-1.421.945 on a décrit un procédé de teinture de superpolyamides naturelles par des colorants réactifs. Selon ce procédé, on utilise un bain de foulardage qui contient, outre une solution d'un colorant réactif, une forte proportion d'acide formique, un agent auxiliaire tensio-actif et cation-actif, un produit de condensation d'un acide gras contenant plus de 8 atomes de carbone et d'un excès d'alcanolamine ou un produit d'addition de 10 moles au plus d'oxyde d'alkylène sur un alkyl phénol ou sur un alcool de poids moléculaire élevé. Il est précisé que le bain peut contenir en outre d'autres agents auxiliaires tels que des substances hydrotropes et analogues.

Enfin, la publication « TEXTIL VEREDLUNG » vol. 14, n° 7 de juillet 1979 concerne un procédé de teinture pour textiles dans lequel on utilise un colorant dissous dans l'alcool ou un mélange alcool-eau avec addition de petites quantités de glycérine, acétone et acide citrique. La teinture est fixée par séchage, puis action de la vapeur. Ce procédé peut être mis en œuvre pour teindre du coton, de la viscose, de la soie naturelle, du polyamide.

Jusqu'à présent, la méthode de teinture au pinceau sur un tissu tendu sur un cadre, à des fins artistiques, n'était applicable qu'aux tissus de soie. Encore demandait-elle le traitement de fixage que l'invention permet d'éviter. Dans la peinture sur soie, on utilise des colorants de diverses catégories chimiques, du type des colorants dits réactifs, que l'on applique au pinceau sur le tissu, à l'intérieur de motifs décoratifs dont le contour est au préalable déterminé à l'aide d'une dissolution de latex qui a pour rôle de former sur le tissu une barrière hygroscopique. Celle-ci limite la diffusion de la solution de colorants qui s'étend par capillarité sur toute la surface du motif. Cette solution de colorants est dite fusante. Après son application et son séchage la pièce de tissu peinte est traitée thermiquement au cours d'une opération de fixage par vaporisation et étuvage.

Telle qu'elle est pratiquée actuellement, la peinture sur soie exige donc que l'artisan dispose d'une étuve ou qu'il fasse traiter l'article peint par un spécialiste. L'opération thermique de fixation constitue donc une entrave sérieuse dans l'application du procédé.

Malgré ces difficultés, on a cherché à étendre les possibilités d'application du procédé à la décoration des tissus de coton, mais en vain. Les colorants directs susceptibles d'être utilisés sur le coton réclament l'application de techniques tinctoriales, par trempage et foulage, qui nécessitent un bain de teinture porté à une température élevée. Il existe aussi des colorants réactifs qui conviennent au coton et permettent la teinture à froid, tout en conduisant à des couleurs « solides », mais à la condition que le tissu soit maintenu dans le bain pendant environ six heures. C'est dire que ces colorants sont actuellement toujours utilisés en bains et qu'il est apparu sans espoir de chercher à adapter aux tissus de coton les techniques de la peinture sur soie impliquant l'application du colorant sur un tissu tendu sur un cadre.

La présente invention remédie à cette lacune par le fait qu'elle permet de peindre sur coton aussi facilement que sur soie et simultanément, elle apporte en plus l'avantage, sur tous tissus, de supprimer le traitement thermique complémentaire de fixation du colorant.

L'invention a principalement pour objet un procédé de teinture à froid sur tissu, suivant lequel on applique sur le tissu tendu un mélange de teinture liquide préparé au moment de l'emploi, ledit mélange de teinture comprenant une solution neutre contenant un colorant réactif dans un état stable, une solution aqueuse alcaline de pH entre 9 et 12 et un agent hygroscopique choisi parmi l'éthylène-glycol, le propylène-glycol, un triol tel que le glycérol, le lactate de sodium ou l'acide pyrrolidone-carboxylique, et, après réaction du colorant avec le tissu, on élimine par lavage du tissu l'agent hygroscopique ainsi que l'excès éventuel du colorant et des constituants participant à l'action du colorant.

Dans la mise en œuvre de ce procédé, l'agent hygroscopique évite un séchage trop rapide du tissu et

2

maintient l'humidité nécessaire à la réaction du colorant dans la solution en contact avec les fibres du tissu, aussi longtemps qu'il n'est pas volontairement éliminé. Comme agent hygroscopique, on utilise notamment l'éthylène-glycol, le propylène-glycol, un triol comme le glycérol, le lactate de sodium ou l'acide pyrrolidone-carboxylique, qui sont des composés capables de conférer au mélange de teinture la capacité d'absorber l'humidité ambiante dans un milieu atmosphérique normal, sans pour autant modifier sensiblement d'autres propriétés physiques ou chimiques du mélange, telles que son caractère fluide initial et sa réactivité avec les fibres du tissu. Les agents hygroscopiques préférés sont, d'autre part, avantageux en ce sens qu'ils sont faciles à éliminer par simple lavage du tissu à l'eau savonneuse.

Au départ, l'agent hygroscopique peut être avantageusement présent dans l'une ou l'autre des solutions qui sont mélangées au moment de l'emploi, et de préférence dans la solution à pH sensiblement neutre qui contient le colorant. Dans cette première solution, le colorant est conservé à l'état stable. Mais quand on y ajoute la solution de dilution, celle-ci crée dans le mélange des conditions de pH qui amènent le colorant à l'état réactif et favorisent sa fixation sur le tissu.

Après lavage et rinçage, la réaction se trouve arrêtée par le fait que ces conditions sont supprimées ainsi que l'agent hygroscopique. Un repassage normal, à la température usuelle de repassage du tissu, permet alors d'assurer un séchage rapide du tissu, de telle sorte que l'on obtient finalement un tissu teint aux couleurs solides, résistant aux lavages répétés à la température normale correspondant à la nature du tissu. Il n'y a pas lieu de prévoir un traitement spécial de fixation en étuve.

L'invention met ainsi la peinture sur tissu à la portée de tout particulier puisqu'il n'est besoin de disposer d'aucun moyen spécial pour un traitement de fixation qui est supprimé. L'application de mélange de teinture peut s'effectuer, sur le tissu tendu sur un cadre, à l'aide d'un pinceau de type quelconque. Le mélange liquide s'étend dans le tissu et on limite, en général, sa diffusion à l'intérieur de zones contournées au préalable par du latex du genre de la gutta-percha qui forme une barrière hygroscopique. On peut aussi laisser des teintes différentes diffuser les unes dans les autres et réaliser aisément des dégradés de couleurs. Pour éclaircir une teinte, il n'est pas nécessaire de mélanger des colorants différents et d'ajouter du blanc. Il suffit de diluer la quantité de solution tampon que l'on mélange à la solution neutre. Suivant la proportion de diluant, on peut obtenir, à volonté, des effets du genre de l'aquarelle, où un lavis transparent préserve l'aspect du tissu.

Les avantages qui viennent d'être signalés sont communs à tous les tissus. Mais ils ne s'arrêtent pas là. Par le fait que le procédé est applicable à tous genres de tissus, par emploi de colorants réactifs correspondants, l'invention permet de retrouver la liberté de création artistique de la peinture sur soie dans le cas d'autres tissus qui présentent sur la soie des avantages propres, de nature de fibres, texture, lavabilité par exemple, et pour lesquels on ne dispose pas de colorants réactifs utilisables suivant la technique usuelle de la peinture sur soie. Ainsi, notamment, dans le cas des tissus de coton, alors que les temps de contact nécessaires entre les colorants et les fibres du tissu étaient rédhibitoires en regard de la rapidité de séchage par évaporation dans le cas d'un tissu teint par des solutions classiques, ils ne posent plus aucun problème lorsque l'agent hygroscopique utilisé dans le procédé de l'invention maintient suffisamment longtemps l'état d'hydratation apte à permettre la montée des colorants réactifs.

Conformément à un mode de mise en œuvre particulier de l'invention, convenant notamment à des tissus à base de coton, le diluant est une solution aqueuse alcaline, de pH compris de préférence entre 10 et 11,5. Pour constituer une telle solution, on peut utiliser par exemple une solution d'hydroxyde de sodium ou de potassium de concentration appropriée, ou tous sels de base forte à pH alcalin, mais on préfère en général les solutions tampons telles que les solutions carbonate/bicarbonate de sodium et/ou potassium, qui ont l'avantage d'offrir plus de sécurité pour l'utilisateur les manipulant.

Sur le coton, on a en général intérêt à prévoir des temps de contact qui soient relativement longs, de l'ordre de 2 à 6 jours, avant lavage du tissu pour éliminer les excès et l'agent hygroscopique. Pendant ces temps, le tissu peut être laissé à l'atmosphère ambiante. Il n'est pas utile d'élever la température. Sur d'autres tissus, on peut utiliser les mêmes diluants, toujours à froid, mais on peut alors réduire les temps de contact, parfois d'une manière importante, par exemple jusqu'à des temps de 2 à 10 heures pour la soie.

Dans les conditions usuelles de température et d'humidité, on trouve facilement des agents hygroscopiques efficaces à des concentrations qui ne gênent pas la montée des colorants. Ces concentrations sont par exemple de l'ordre de 5 à 100 g/l, et de préférence de 10 à 50 g/l, pour le glycérol ou le propylène-glycol, ou de l'ordre de 2 à 15 g/l pour un agent plus hygroscopique tel que l'acide DL 2-pyrrolidone 5-carboxylique. Il s'agit là de concentrations exprimées par rapport au volume d'une solution de colorant contenant elle-même l'agent hygroscopique, ou par rapport à une solution de dilution alcaline contenant cet agent et destinée à être mélangée en volume au moins égal avec la solution de colorant.

Il existe de nombreux colorants réactifs de la cellulose ou de la fibroïne qui peuvent être utilisés dans ces conditions selon l'invention. En général, on préfère ceux qui ont une solubilité dans l'eau au moins égale à 100 g/l, ce qui permet de préparer des solutions neutres concentrées à partir desquelles on peut obtenir des colorations intenses même après dilution avec de 1 à 3 volumes de diluant lors de la préparation du mélange de teinture prêt à l'emploi. Pour obtenir des teintes plus claires, on augmente la proportion de diluant, qui peut donc varier dans des gammes très larges, par exemple entre 1 et 1 000 volumes pour 1 volume de solution à 20 à 200 g/l de colorant.

La solution neutre de colorant, à pH généralement compris entre 6,5 et 7,5, peut contenir en outre divers additifs classiques en eux-mêmes, et notamment un agent solubilisant du colorant, le plus souvent de l'urée en concentration à peu près équivalente à celle du colorant, c'est-à-dire de l'ordre de 20 à 200 g/l. On remarquera cependant que la plupart des additifs peuvent être incorporés aussi bien à la solution de dilution qu'à la solution de colorant, du moment qu'ils ne présentent pas en milieu alcalin la même instabilité que le colorant. Ainsi, l'une comme l'autre des solutions peuvent contenir des agents qui augmentent l'affinité du colorant pour les fibres textiles et qui améliorent l'unisson de la teinture, tels que les chlorures ou sulfates alcalins en proportion de 10 à 50 g/l, des dispersants du genre des éthers aliphatiques en proportion de 20 à 50 g/l, des agents protecteurs de la redéposition, qui évitent la réduction chimique des colorants au moment du lavage, tels que le nitrobenzène-sulfonate de sodium en proportion de 1 à 5 g/l, des agents mouillants en proportion de 0,1 à 3 g/l, etc.

On indiquera maintenant d'une manière plus précise quelques compositions de produits selon l'invention, à titre d'exemples non limitatifs.

On a préparé tout une gamme de couleurs pour coton, utilisables aussi sur tous tissus de fibres naturelles ou artificielles, en utilisant comme colorants réactifs des colorants de la famille des dérivés chlorotriaziniques de la marque Procion® (I.C.I), des colorants à reste bétasulfatoéthyl sulfonique de la marque Remazol®, et des colorants dérivés de la tétrachloro-2,4,5,6 pyrimidine de la série de la marque Drimaren® (Sandoz). Les solutions de colorants présentaient les compositions suivantes, dans l'eau déminéralisée :

|  |  | (I) | (II) | (III) | (IV) |
|---|---|---|---|---|---|
| Colorant réactif | g/l | 100 | 100 | 80 | 50 |
| Urée | g/l | 100 | 80 | 80 | 50 |
| Sulfate de sodium | g/l | 0 | 0 | 30 | 20 |
| Dispersant | g/l | 0 | 25 | 50 | 0 |
| Protecteur de redépos. | g/l | 0 | 0 | 5 | 10 |

|  |  | (V) | (VI) | (VII) |
|---|---|---|---|---|
| Colorant réactif | g/l | 100 | 80 | 50 |
| Chlorure de sodium | g/l | 0 | 25 | 10 |
| Sulfate de sodium | g/l | 0 | 10 | 0 |
| Dispersant | g/l | 50 | 25 | 50 |

Le dispersant utilisé dans ces exemples est un éther aliphatique vendu sous la marque Lyocol® BC et l'agent protecteur de la redéposition est un produit portant la marque Révatol S®.

Des exemples de solutions de dilution alcalines, jouant le rôle d'activateur et fixateur pour les colorants précédents, présentent les compositions suivantes :

|  |  | (I) | (II) | (III) |
|---|---|---|---|---|
| Soude caustique | g/l | 0 | 0 | 3 |
| Potasse caustique | g/l | 0 | 1 | 0 |
| Silicate de sodium | g/l | 20 | 0 | 0 |
| Phosphate trisodique | g/l | 0 | 10 | 0 |
| Glycérol | g/l | 0 | 0 | 40 |
| Propylène-glycol | g/l | 10 | 0 | 0 |
| DL 2-pyrrolidone 5-carboxylique | g/l | 0 | 5 | 0 |
| Urée | g/L | 0 | 0 | 10 |
| Chlorure de sodium | g/l | 10 | 0 | 0 |
| Agent mouillant | g/l | 2 | 0,15 | 0 |

|  |  | (IV) | (V) | (VI) |
|---|---|---|---|---|
| Carbonate de sodium | g/l | 10 | 20 | 50 |
| Glycérol | g/l | 5 | 10 | 0 |
| DL 2-pyrrolidone 5-carboxylique | g/l | 0 | 0 | 15 |
| Urée | g/l | 5 | 5 | 0 |
| Agent mouillant | g/l | 0 | 0,5 | 0,1 |

L'agent mouillant utilisé porte la marque Albigène A® et il est produit par Ciba-Geigy.

Dans un autre exemple, on réalise une teinture convenant pour la soie, en utilisant un fixateur à base de carbonate et bicarbonate de sodium. Les solutions à mélanger au moment de l'emploi présentent les compositions suivantes :

| Solution neutre de colorant | | Solution de dilution avec fixateur | |
|---|---|---|---|
| colorant réactif | 100 g/l | carbonate | 25 g/l |
| urée | 200 g/l | bicarbonate | 10 g/l |
| dispersant | 10 g/l | glycérol | 20 g/l |
| protecteur de redéposition | 10 g/l | propylène-glycol | 5 g/l |
|  |  | agent mouillant | 0,5 g/l |

Comme on l'a déjà indiqué, ces compositions ne sont que des exemples et l'invention englobe toutes leurs variantes. Les teintes les plus variées peuvent être réalisées par des solutions de colorants contenant des mélanges de colorants choisis pour présenter une grande affinité pour des fibres textiles différentes et faciliter ainsi la teinture de tissus mixtes et divers.

## Revendications

1. Procédé de teinture à froid sur tissu, suivant lequel on applique par peinture sur le tissu tendu un mélange de teinture liquide préparé au moment de l'emploi, ledit mélange de teinture comprenant une solution neutre contenant un colorant réactif dans un état stable, une solution aqueuse alcaline de pH entre 9 et 12 et un agent hygroscopique choisi parmi l'éthylène-glycol, le propylène-glycol, un triol tel que le glycérol, le lactate de sodium ou l'acide pyrrolidone-carboxylique, et, après réaction du colorant avec le tissu, on élimine par lavage du tissu l'agent hygroscopique ainsi que l'excès éventuel du colorant et des constituants participant à l'action du colorant.

2. Procédé selon la revendication 1, caractérisé en ce que le colorant est laissé au contact du tissu pendant une durée de l'ordre de 2 à 6 jours, pour un tissu de coton.

3. Procédé selon la revendication 1, caractérisé en ce que le colorant est laissé au contact du tissu pendant une durée de l'ordre de 2 à 10 heures pour un tissu de soie.

4. Procédé selon l'une quelconque des revendications 1 à 3, caractérisé en ce que le tissu est tendu sur un cadre et en ce que l'on réalise une peinture à la main du tissu tandis que le tissu teinté est laissé sur le cadre pendant une période de temps suffisante pour la diffusion du mélange de colorants et la réalisation de la réaction entre le colorant et le tissu avant de procéder à l'enlèvement de l'agent hygroscopique et du colorant précité par lavage.

5. Procédé selon la revendication 4, caractérisé en ce que le mélange colorant liquide précité est appliqué dans des zones précédemment définies avec une dissolution de latex pour former une barrière hygroscopique à la diffusion du mélange de colorants.

6. Produit de teinture à froid par peinture sur tissu, comprenant deux solutions destinées à être mélangées au moment de l'emploi, la première solution étant une solution neutre de colorants contenant un colorant dans un état stable et qui est réactif relativement audit tissu en milieu aqueux, la seconde solution étant une solution aqueuse alcaline de pH compris entre 9 et 12, l'une ou l'autre desdites solutions contenant en outre un agent hygroscopique empêchant le séchage du tissu peint avec un mélange desdites solutions et éliminable par lavage du tissu, ledit agent hygroscopique étant choisi parmi l'éthylène-glycol, le propylène-glycol, un triol tel que le glycérol, du lactate de sodium, ou l'acide pyrrolidone-carboxylique.

7. Produit selon la revendication 6, caractérisé en ce que l'agent hygroscopique est choisi parmi l'éthylène-glycol, le propylène-glycol et un triol tel que le glycérol, et est présent à une concentration comprise entre 5 et 100 g/l dans la solution de colorant ou la solution aqueuse alcaline.

8. Produit selon l'une des revendications 6 ou 7, caractérisé en ce que la solution aqueuse alcaline est une solution tampon de sels inoffensifs à un pH compris entre 9 et 12, et de préférence entre 10 et 11,5 ; le colorant est un composé ou un mélange de composés compatibles dissous dans la solution de colorant en concentration de l'ordre de 20 à 200 g/l.

## Claims

1. Method of cold dyeing of a textile fabric in which a liquid dye mixture prepared at the moment of use is applied by painting on the stretched fabric, said dye mixture being composed of a neutral solution containing a reactive dye in a stable state, an alkaline aqueous solution having a pH between 9 and 12 and a hygroscopic agent chosen from ethylene-glycol, propylene-glycol, a triol such as glycerol, sodium lactate or pyrrolidone-carboxylic acid and, after reaction of the dye with the fabric, the hygroscopic agent as well as any excess dye and constituents which take part in the action of the dye are removed by washing.

2. Method in accordance with claim 1, characterized in that the dye is allowed to remain in contact with the fabric during a period of the order of 2 to 6 days in the case of a cotton fabric.

3. Method in accordance with claim 1, characterized in that the dye is allowed to remain in contact with the fabric during a period of the order of 2 to 10 hours in the case of a silk fabric.

4. Method in accordance with any one of claims 1 to 3, characterized in that the fabric is stretched over a frame and that painting of the fabric is carried out by hand whilst the dyed fabric is left on the frame over a period of time which is sufficient for diffusion of the mixture of dyes and completion of the reaction between the dye and the fabric before carrying out removal of the hygroscopic agent and of the aforementioned dye by washing.

5. Method in accordance with claim 4, characterized in that the aforementioned liquid dye mixture is applied in zones previously defined with a latex solution in order to form a hygroscopic barrier to diffusion of the mixture of dyes.

6. Product for cold dyeing by painting on a textile fabric, comprising two solutions which are intended to be mixed at the moment of use, the first solution being a neutral solution of dyes containing a dye in a stable state which is reactive with respect to said fabric in an aqueous medium, the second solution being an alkaline aqueous solution having a pH comprised between 9 and 12 ; either of said solutions contains in addition a hygroscopic agent which prevents drying of the cloth painted with a mixture of said solutions and which can be removed by washing of the cloth, said hygroscopic agent being selected from ethylene-glycol, propylene-glycol, a triol such as glycerol, sodium lactate or pyrrolidone-carboxylic acid.

7. Product in accordance with claim 6, characterized in that the hygroscopic agent is selected from ethylene-glycol, propylene-glycol and a triol such as glycerol, and is present at a concentration comprised between 5 and 100 g/l in the dye solution or the alkaline aqueous solution.

8. Product in accordance with either of claims 6 or 7, characterized in that the alkaline aqueous solution is a buffer solution of innocuous salts having a pH comprised between 9 and 12 and preferably between 10 and 11.5 ; the dye is a compound or a mixture of compatible compounds dissolved in the dye solution at a concentration of the order of 20 to 200 g/l.

## Ansprüche

1. Verfahren zum Kaltfärben von Gewebe, bei dem durch Malen auf den gespannten Stoff eine flüssige, zum Zeitpunkt der Anwendung vorbereitete Farbmischung aufgebracht wird, wobei diese Farbmischung eine neutrale Lösung mit einem reaktiven Farbstoff in einem stabilen Zustand, eine wässrige alkalische Lösung mit einem pH-Wert zwischen 9 und 12 und ein hygroskopisches Agens enthält, welches Ethylenglycol, Propylenglycol, ein Triol wie Glycerin, Natriumlactat oder Pyrrolidon-Carbonsäure sein kann, und bei dem nach der Reaktion der Farbe mit dem Gewebe durch Waschen des Gewebes das hygroskopische Agens sowie gegebenenfalls überschüssiger Farbstoff und die bei der Behandlung weiterhin beteiligten Bestandteile herausgewaschen werden.

2. Verfahren nach Anspruch 1, dadurch gekennzeichnet, daß bei einem Baumwollgewebe die Farbmischung 2 bis 6 Tage in Kontakt mit dem Gewebe gelassen wird.

3. Verfahren nach Anspruch 1, dadurch gekennzeichnet, daß bei einem Seidengewebe die Farbmischung 2 bis 10 Stunden in Kontakt mit dem Gewebe gelassen wird.

4. Verfahren nach einem der Ansprüche 1 bis 3, dadurch gekennzeichnet, daß das Gewebe auf einen Rahmen gespannt wird, daß durch Hand die Farbmischung auf das Gewebe aufgebracht wird, und das gefärbte Gewebe eine genügend lange Zeit in dem Rahmen verbleibt, damit sich die Farbmischung verteilen und die Reaktion zwischen Farbstoff und Gewebe erfolgen kann, bevor durch Waschen das hygroskopische Agens und der Farbstoff herausgewaschen werden.

5. Verfahren nach Anspruch 4, dadurch gekennzeichnet, daß die flüssige Farbmischung in zuvor mit einer Latex-Lösung definierten Zonen aufgebracht wird, die eine hygroskopische Barriere für die Verteilung der Farbmischung bilden.

6. Durch Malen auf ein Gewebe auftragbares Kaltfärbemittel, bestehend aus zwei Lösungen, die zum Zeitpunkt der Benutzung gemischt werden, wobei die eine Lösung eine neutrale Farblösung ist, die einen Farbstoff in stabilem Zustand enthält, der in wässrigem Milieu relativ leicht mit einem Gewebe reagiert, die zweite Lösung eine wässrige alkalische Lösung mit einem pH-Wert zwischen 9 und 12 ist, und eine der beiden Lösungen außerdem ein hygroskopisches Agens enthält, das ein Austrocknen des mit einer Mischung der besagten Lösung gefärbten Gewebes verhindert, und das durch Wasches des Gewebes entfernt werden kann, wobei dieses hygroskopische Agens Ethylenglycol, Propylenglycol, ein Triol wie Glycerin, Natriumlaktat oder Pyrrolidon-Carbonsäure sein kann.

7. Kaltfärbemittel nach Anspruch 6, dadurch gekennzeichnet, daß das hygroskopische Agens Ethylenglycol, Propylenglycol oder ein Triol wie Glycerin ist und in der Farbstofflösung oder der wässrigen alkalischen Lösung in einer Konzentration zwischen 5 und 100 g/l vorliegt.

8. Kaltfärbemittel nach einem der Ansprüche 6 und 7, dadurch gekennzeichnet, daß die wässrige alkalische Lösung eine Pufferlösung aus nicht schädlichen Salzen mit einem pH-Wert zwischen 9 und 12, vorzugsweise zwischen 10 und 11,5, ist, und der Farbstoff eine Zusammensetzung oder eine Mischung verträglicher Komponenten ist, die in der Farbstofflösung in einer Konzentration von 20-200 g/l gelöst vorliegen.